# FASCICULE DE BREVET EUROPEEN

(11) **EP 3 390 182 B1**
(45) Date de publication et mention de la délivrance du brevet: **01.07.2020**
(21) Numéro de dépôt: 16823206.4
(22) Date de dépôt: 15.12.2016
(51) Int. Cl.: B60T 13/74, F16D 55/226, F16D 65/18

(54) **ACTIONNEUR ELECTROMECANIQUE A ENCOMBREMENT REDUIT POUR FREIN A DISQUE**
ELEKTROMECHANISCHER SCHEIBENBREMSAKTUATOR MIT REDUZIERTEM PLATZBEDARF
COMPACT ELECTROMECHANICAL DISC BRAKE ACTUATOR

(30) Priorité: 17.12.2015 FR 1562603
(43) Date de publication de la demande: 24.10.2018
(73) Titulaire: Foundation Brakes France, 93700 Drancy (FR)
(72) Inventeur: BOURLON, Philippe, 77230 Dammartin en Goele (FR); PASQUET, Thierry, 94700 Vincennes (FR); CUBIZOLLES, Cyril, 93700 Drancy (FR)
(74) Mandataire: Brevalex
(86) Numéro de dépôt international: PCT/EP2016/081290
(87) Numéro de publication internationale: WO 2017/103005

(56) Documents cités:
- EP-A1- 2 345 830
- EP-A1- 2 667 052
- EP-A1- 2 927 531
- WO-A1-99/45292
- WO-A1-2015/082299
- DE-A1- 19 605 988
- DE-A1- 19 818 157
- US-A- 4 804 073

## Description

### DOMAINE TECHNIQUE

L'invention se rapporte à un frein à disque de véhicule automobile, de type électromécanique, c'est-à-dire comprenant un actionneur électromécanique pour presser une ou plusieurs plaquettes contre le disque afin de générer le freinage.

### ÉTAT DE LA TECHNIQUE ANTÉRIEURE

Plus particulièrement, l'invention se rapporte à un frein à disque comportant un disque chevauché par un étrier portant des plaquettes de friction et un piston pour presser ces plaquettes contre le disque ainsi qu'un actionneur électromécanique actionnant ce piston. En pratique, l'étrier comporte un corps d'étrier auquel l'actionneur électromécanique est rigidement fixé.

Le corps d'étrier inclut une base portant le piston et une plaquette poussée par ce piston, cette base étant prolongée par une voûte prolongée par des doigts portant une plaquette opposée, le disque du frein étant situé entre ces deux plaquettes. Ce corps d'étrier est typiquement monté flottant en étant porté par un support pour être librement mobile en translation selon un axe principal orienté transversalement par rapport au véhicule équipé, et qui correspond à l'axe de révolution du disque et à l'axe de translation du piston.

L'actionneur électromécanique a un encombrement bien plus important que celui d'un actionneur traditionnel de type hydraulique qui est lui intégré dans la base du corps d'étrier puisqu'il se limite à une chambre de compression fermée par le piston.

Cet actionneur électromécanique comprend un carter renfermant un moteur accouplé à un réducteur mécanique orienté selon l'axe du moteur parallèlement à l'axe principal, ce carter étant fixé à la base du corps d'étrier. L'actionneur est accouplé à un mécanisme de transformation de mouvement, de type à liaison hélicoïdale, permettant de déplacer le piston en translation sur rotation du moteur via des éléments de transmission, le piston et ce mécanisme étant intégrés à la base de l'étrier. Lorsque le moteur est alimenté électriquement, il exerce un moment de forces sur le mécanisme, et ce moment est converti en un effort presseur exercé par le piston sur la plaquette.

Les dimensions de l'ensemble formé par le corps d'étrier avec son actionneur sont pénalisantes du fait que le frein est monté dans la jante de la roue qu'il équipe. L'encombrement de l'étrier équipé de son actionneur est ainsi limité radialement par le fait qu'il doit loger entre la face interne cylindrique de la jante et le disque de freinage.

Compte tenu de la puissance mécanique requise, le moteur électrique de l'actionneur présente des dimensions importantes. Il est logé dans une protubérance dépassant de la face de fixation du carter de façon à s'étendre le long de la voute du corps d'étrier dépassant d'oreilles d'étrier de réception de colonnettes non représentées, de la même manière que cette voute qu'il longe. Le réducteur est quant à lui situé contre la base de l'étrier en arrière du piston pour être accouplé au mécanisme de transformation de mouvement. Le document WO99/45292 A1 décrit un actionneur avec un réducteur épicycloïdal dans lequel le moteur et le réducteur sont coaxiaux.

Le but de l'invention est de proposer une solution permettant de diminuer l'encombrement d'un actionneur de frein électromécanique pour simplifier son intégration.

### EXPOSÉ DE L'INVENTION

L'invention a pour objet un actionneur électromécanique pour étrier de frein de véhicule automobile, cet actionneur comprenant un carter ayant une face de fixation à un corps d'étrier, ce carter renfermant un moteur électrique et un réducteur mécanique accouplés l'un à l'autre et comprenant chacun des composants tournant autour d'axes parallèles à un axe de rotation du moteur, caractérisé en ce que tout le moteur et au moins la majorité du réducteur s'étendent d'un même côté de la face de fixation le long de l'axe de rotation du moteur.

Avec cette solution, l'ensemble du moteur s'étend en direction opposée au corps d'étrier, c'est-à-dire en direction opposée à l'espace interne délimité par la jante lorsque l'étrier est monté, ce qui permet de faciliter l'intégration de l'étrier équipé de son actionneur puisqu'il est moins contraint par l'espace interne de la jante.

L'invention a également pour objet un actionneur ainsi défini, dans lequel tout le réducteur s'étend d'un même côté de la face de fixation le long de l'axe de rotation du moteur.

L'invention a également pour objet un actionneur ainsi défini, dans lequel la face de fixation est plane et orientée perpendiculairement à l'axe de rotation du moteur.

L'invention a également pour objet un actionneur ainsi défini, dans lequel le carter comporte une face opposée parallèle à la face de fixation, et dans lequel le moteur et le réducteur s'étendent tous deux entièrement entre la face de fixation et la face opposée le long de l'axe de rotation du moteur.

L'invention a également pour objet un actionneur ainsi défini, dans lequel le moteur est un moteur à carcasse tournante et à bobinages fixes sans balai.

L'invention a également pour objet un actionneur ainsi défini, intégrant au moins une carte électronique de pilotage du moteur.

L'invention a également pour objet un étrier de frein équipé d'un actionneur ainsi défini.

L'invention a également pour objet un étrier ainsi défini, comprenant un corps d'étrier monté flottant.

### BRÈVE DESCRIPTION DES DESSINS

La figure 1 est une vue d'ensemble d'un corps d'étrier de frein électromécanique représenté seul ;
La figure 2 est une vue en d'ensemble d'un actionneur électromécanique destiné à équiper un étrier et qui est représenté en éclaté ;
La figure 3 est une représentation en coupe transversale d'un moteur sans balai à carcasse tournante adapté à l'actionneur selon l'invention ;
La figure 4 est une vue en éclaté de l'étrier selon l'invention comprenant son corps d'étrier ainsi et les différents composants constituant l'actionneur électromécanique selon l'invention.

### EXPOSÉ DÉTAILLÉ DE MODES DE RÉALISATION PARTICULIERS

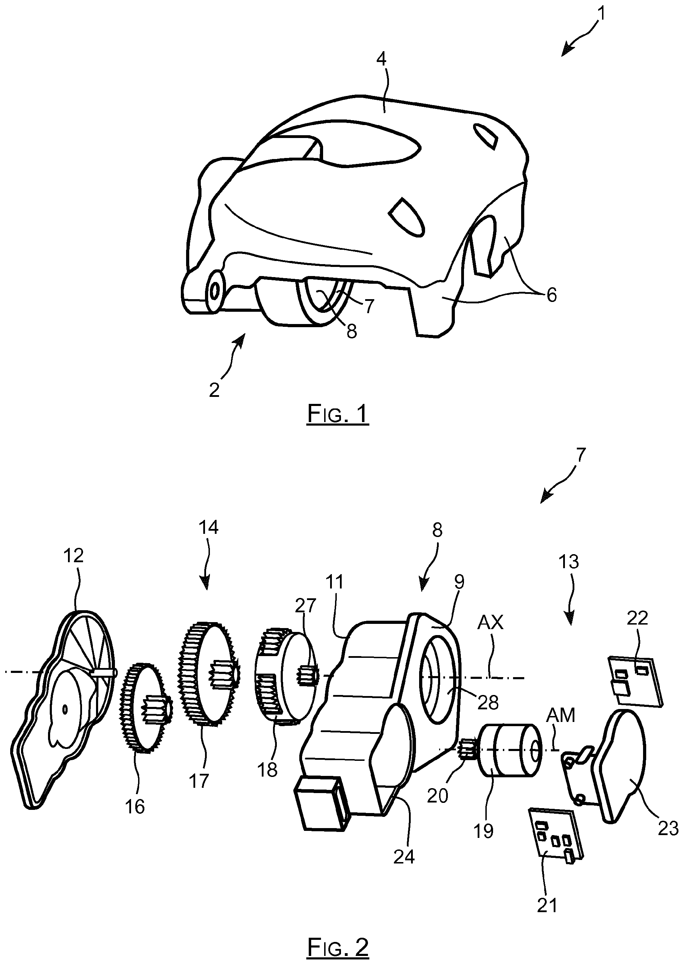

Le corps d'étrier de frein 1 qui est représenté sur la figure 1 comporte une base 2 prolongée par une voûte 4 prolongée par des doigts 6. La base 2 comporte un logement 7 dans lequel est engagé un piston mobile pour presser une plaquette non représentée sur un disque de freinage.

Cette base 2 renferme encore dans la région arrière du piston un mécanisme de transformation de mouvement à liaison hélicoïdale, pour convertir un mouvement de rotation en un mouvement de translation du piston, ce qui correspond à convertir un moment de forces en un effort presseur.

Ce corps d'étrier 1 est équipé d'un actionneur électromécanique 7 visible sur la figure 2, pour agir sur le piston de façon à presser la plaquette contre le disque, sur activation de cet actionneur.

Cet actionneur 7 comprend un carter 8 ayant une face de fixation 9 par laquelle il est destiné à être accouplé au corps d'étrier, et une face opposée 11 fermée par un couvercle 12. La face de fixation 9 et la face opposée 11 sont des faces sensiblement planes et parallèles l'une à l'autre.

Comme visible sur la figure, la face de fixation 9 comporte une portion principale entourant une ouverture d'accouplement 28, et par laquelle le carter est appliqué contre la base 2 du corps d'étrier, qui est une surface entièrement plane pouvant être usinée dans l'exemple des figures.

Ce carter 8 renferme différents composants formant un ensemble de motorisation 13 accouplé à un réducteur mécanique 14 qui permet de déplacer le piston lorsque ce réducteur est accouplé au corps d'étrier 1, c'est-à-dire lorsque l'actionneur 7 est fixé à la base 2.

Le réducteur 14 comporte une première double roue dentée 16 engrenée dans une seconde double roue dentée 17, qui entraîne un train épicycloïdal 18. L'ensemble de motorisation 13 comporte un moteur électrique 19 ayant un pignon de sortie 20, ainsi que deux cartes électroniques 21, 22 qui pilotent ce moteur 19. Les cartes et le moteur 19 sont portés par une plaque 23 fermant et se fixant dans une ouverture correspondante 24, cette ouverture débouchant dans la face de fixation 9 du carter 8.

Comme visible sur la figure 2, les éléments du réducteur tournent autour d'axes parallèles à l'axe de rotation du moteur, repéré par AM. Dans l'exemple des figures, l'axe AM est parallèle à un axe principal repéré par AX qui correspond à l'axe de translation du piston lorsque l'actionneur est monté sur le corps d'étrier, cet axe AX s'étendant transversalement par rapport au véhicule équipé du frein.

Lorsque l'actionneur est monté, le moteur 19 avec les cartes 21 et 22 sont en place dans la cavité correspondant à l'ouverture 24, et le pignon 20 entraîne la première double roue dentée 16. Le train épicycloïdal 18 comporte un pignon de sortie 27 qui débouche dans une ouverture correspondante 28 de la face de montage 9, pour entraîner le mécanisme de transformation de mouvement logé dans la base 2.

Conformément à l'invention, l'actionneur est agencé pour que tout le moteur 19 et au moins la majorité du réducteur 14 s'étendent d'un même côté de la face de fixation 9, le long de l'axe AM. Autrement dit, il existe un plan normal à l'axe AM situé entre d'une part la face de fixation 9, et d'autre part le moteur et la majorité du réducteur. En pratique, la majorité du réducteur 14 est située du même côté que le moteur par rapport à ce plan, c'est essentiellement le pignon de sortie 27 du réducteur qui peut être de l'autre côté de ce plan.

Dans l'exemple des figures, la face de fixation 9 est plane et normale à l'axe AM, et le moteur 19 loge entièrement entre la face de fixation 9 et la face opposée 11 du carter 8 de l'actionneur 7. L'ensemble de cet actionneur loge ainsi entièrement dans le voisinage de la base du corps d'étrier, au lieu de s'étendre le long de la voute au-dessus le disque de freinage. Autrement dit, l'actionneur est situé entièrement d'un même côté du corps d'étrier et du disque du frein, au lieu de s'étendre de part et d'autre du disque.

Le moteur utilisé présente un encombrement réduit le long de son axe de révolution AM et un diamètre plus important pour délivrer le moment ou couple mécanique nécessaire à l'action de freinage une fois sa vitesse réduite par le réducteur 14, tout en présentant une plus grande compacité dans l'exemple des figures.

Ce moteur 19 est avantageusement un moteur sans balai à bobinages fixes à carcasse externe tournante portant des aimants permanents, piloté par les cartes électroniques 21, 22. Ce type de moteur délivre pour un diamètre externe donné une plus grande puissance et/ou un plus grand couple que les autres, de sorte qu'il peut loger dans l'espace disponible entre la face de fixation et la face opposée de l'actionneur.

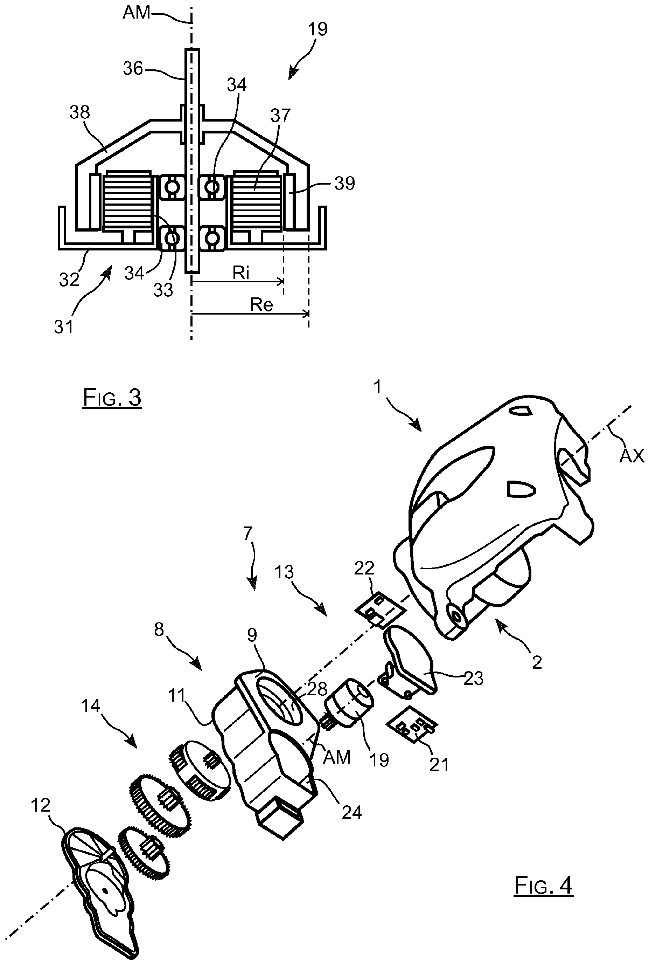

Comme représenté sur la figure 3 un moteur sans balai à bobinages fixes et carcasse tournante comporte un support fixe 31 formé d'une embase plane 32 pourvue d'une portion centrale tubulaire 33 dans laquelle est logé un palier, formé ici par deux roulements à bille 34, pour porter un arbre rotatif central 36. Ce support 31 porte plusieurs bobinages fixes 37 répartis autour de la portion centrale tubulaire 33, qui sont alimentés électriquement par l'intermédiaire de cartes de pilotages telles que les cartes 21 et 22 des figures 2 et 4.

L'ensemble constitué par les bobinages 37 et la portion centrale tubulaire 33 est coiffé par une carcasse tournante 38 ayant un rayon externe noté Re qui est portée par l'arbre rotatif 36. Cette carcasse tournante 38, qui forme avec l'axe ou arbre 36 le rotor du moteur 19, porte plusieurs aimants permanents 39 situés radialement en vis-à-vis des bobinages 37, de manière à être entraînée en rotation par ceux-ci lorsqu'ils sont alimentés électriquement.

Comme on peut le voir sur la figure 3, de par la structure générale d'un moteur sans balai à carcasse tournante, le rayon intermédiaire Ri correspondant à l'espace situé entre les bobinages 37 et les aimants permanents 39 a une valeur très proche du rayon externe Re de la carcasse, ici Ri = Re x 80%. Ceci permet au moteur 19 de délivrer un couple important puisque les interactions magnétiques sont exercées à un rayon intermédiaire Ri très proche du rayon externe Re.

Dans l'exemple des figures, le moteur 19 ainsi que ses cartes de pilotage 21 et 22 sont portés par la plaque de fermeture 23 en étant fixés à celle-ci, et le montage de ce moteur ainsi que son accouplement consiste principalement à fixer la plaque de fermeture 23 dans l'ouverture 24 pour la fermer.

Dans l'exemple des figures, la face de montage 9 a une forme généralement plane, comprenant principalement une ouverture 28 par l'intermédiaire de laquelle l'actionneur est accouplé à la base 2 du corps d'étrier, tout en étant fixé à celui-ci.

Par ailleurs, l'étrier selon l'invention comporte avantageusement, outre les moyens électromécaniques de déplacement du piston, des moyens hydrauliques de déplacement de ce piston. Dans ce cas, les moyens électromécaniques assurent le déplacement du piston dans le cas d'un freinage de parking, et les moyens hydrauliques assurent son déplacement en cas de freinage de service.

### Nomenclature :

- 1 :: corps d'étrier
- 2 :: base
- 4 :: voûte
- 6 :: doigts
- 7:: actionneur électromécanique
- 8 :: carter
- 9 :: face de fixation
- 11 :: face opposée
- 12 :: couvercle
- 13 :: ensemble de motorisation
- 14 :: réducteur mécanique
- 16 :: première double roue dentée
- 17 :: seconde double roue dentée
- 18 :: train épicycloïdal
- 19 :: moteur
- 20 :: pignon
- 21 :: cartes électroniques
- 22 :: cartes électroniques de pilotage
- 23 :: plaque
- 24 :: ouverture
- 27 :: pignon de sortie
- 28 :: ouverture
- 31 :: support
- 32 :: base plane
- 33 :: portion tubulaire
- 34 :: roulement à bille
- 36 :: arbre rotatif
- 37 :: bobinage
- 38 :: carcasse tournante
- 39 :: aimant permanent
- AX :: axe

## Revendications

1. Actionneur électromécanique (7) pour étrier de frein de véhicule automobile, cet actionneur (7) comprenant un carter (8) ayant une face de fixation (9) à un corps d'étrier (1), ce carter (7) renfermant un moteur électrique (19) ayant un axe de rotation (AM), et un réducteur mécanique (14) accouplé à ce moteur électrique (19), le réducteur mécanique (14) étant constitué d'éléments tournants (16, 17, 18) qui tournent autour d'autres axes parallèles à l'axe de rotation du moteur (AM), **caractérisé en ce que** tout le moteur (19) et au moins la majorité du réducteur (14) s'étendent d'un même côté de la face de fixation (9) le long de l'axe de rotation du moteur (AM).

2. Actionneur selon la revendication 2, dans lequel tout le réducteur (14) s'étend d'un même côté de la face de fixation (9) le long de l'axe de rotation du moteur (AM).

3. Actionneur selon la revendication 1 ou 2, dans lequel la face de fixation (9) est plane et orientée perpendiculairement à l'axe de rotation du moteur (AM).

4. Actionneur selon la revendication 3, dans lequel le carter (8) comporte une face opposée (11) parallèle à la face de fixation (9), et dans lequel le moteur (19) et le réducteur (14) s'étendent tous deux entièrement entre la face de fixation (9) et la face opposée (11) le long de l'axe de rotation du moteur (AM).

5. Actionneur selon l'une des revendications précédentes, dans lequel le moteur (19) est un moteur à carcasse tournante (38) et à bobinages fixes (37) sans balai.

6. Actionneur selon la revendication 5, intégrant au moins une carte électronique (21, 22) de pilotage du moteur (19).

7. Etrier de frein équipé d'un actionneur tel que défini dans l'une des revendications précédentes.

8. Etrier de frein selon la revendication 7, comprenant un corps d'étrier monté flottant.

## Patentansprüche

1. Elektromechanischer Aktuator (7) für einen Bremssattel eines Automobilfahrzeugs, wobei dieser Aktuator (7) ein Gehäuse (8) umfasst, das eine Fläche (9) zur Befestigung an einem Sattelkörper (1) aufweist, wobei dieses Gehäuse (7) einen Elektromotor (19) mit einer Drehachse (AM) einschließt, und ein mechanisches Getriebe (14), das mit diesem Elektromotor (19) gekoppelt ist, wobei das mechanische Getriebe (14) mit Drehelementen (16, 17, 18) gebildet ist, die sich um andere Achsen parallel zur Drehachse des Motors (AM) drehen, **dadurch gekennzeichnet, dass** der gesamte Motor (19) und wenigstens der Großteil des Getriebes (14) sich von ein und derselben Seite der Befestigungsfläche (9) entlang der Drehachse des Motors (AM) erstrecken.

2. Aktuator nach Anspruch 1, bei dem sich das gesamte Getriebe (14) von ein und derselben Seite der Befestigungsfläche (9) entlang der Drehachse des Motors (AM) erstreckt.

3. Aktuator nach Anspruch 1 oder 2, bei dem die Befestigungsfläche (9) eben und orthogonal zur Drehachse des Motors (AM) orientiert ist.

4. Aktuator nach Anspruch 3, bei dem das Gehäuse (8) eine entgegengesetzte Fläche (11) parallel zur Befestigungsfläche (9) umfasst, und bei dem der Motor (19) und das Getriebe (14) sich beide vollständig zwischen der Befestigungsfläche (9) und der entgegengesetzten Fläche (11) entlang der Drehachse des Motors (AM) erstrecken.

5. Aktuator nach einem der vorhergehenden Ansprüche, bei dem der Motor (19) ein Motor mit Drehgestell (38) und mit festen Spulen (37) ohne Bürste ist.

6. Aktuator nach Anspruch 5, der wenigstens eine elektronische Karte (21, 22) zur Steuerung des Motors (19) enthält.

7. Bremssattel, der mit einem Aktuator wie in einem der vorhergehenden Ansprüche definiert ausgestattet ist.

8. Bremssattel nach Anspruch 7, umfassend einen schwimmend montierten Sattelkörper.

## Claims

1. An electromechanical actuator (7) for a brake calliper of an automobile vehicle, this actuator (7) comprising a casing (8) having an attachment face (9) for attachment to a calliper body (1), this casing (7) enclosing an electric motor (19) having an axis of rotation (AM), and a mechanical reduction gear (14) mated with this electric motor (19), the mechanical reduction gear (14) consisting of rotating elements (16, 17, 18) which rotate about other axes parallel to the axis of rotation of the motor (AM), **characterised in that** the entire motor (19) and at least most of the reduction gear (14) extend on a same side of the attachment face (9) along the axis of rotation of the motor (AM).

2. The actuator according to claim 2, wherein the entire reduction gear (14) extends on a same side of the attachment face (9) along the axis of rotation of the motor (AM).

3. The actuator according to claim 1 or 2, wherein the attachment face (9) is planar and oriented perpendicular to the axis of rotation of the motor (AM).

4. The actuator according to claim 3, wherein the casing (8) includes an opposite face (11) parallel to the attachment face (9), and wherein the motor (19) and the reduction gear (14) both extend fully between the attachment face (9) and the opposite face (11) along the axis of rotation of the motor (AM).

5. The actuator according to one of the preceding claims, wherein the motor (19) is a brushless rotating frame motor (38) with fixed windings (37).

6. The actuator according to claim 5, integrating at least one electronic board (21, 22) for driving the motor (19).

7. A brake calliper equipped with an actuator as defined in any of the preceding claims.

8. The brake calliper according to claim 7, comprising a floating-mounted calliper body.
